(19) Europäisches Patentamt
European Patent Office
Office européen des brevets

(11) **EP 4 684 923 A1**

(12) **EUROPEAN PATENT APPLICATION**

(43) Date of publication:
**28.01.2026 Bulletin 2026/05**

(21) Application number: **25175283.8**

(22) Date of filing: **09.05.2025**

(51) International Patent Classification (IPC):
**B25J 5/00** $^{(2006.01)}$ **B01L 9/06** $^{(2006.01)}$
**B25J 15/02** $^{(2006.01)}$ **B25J 15/04** $^{(2006.01)}$
**G01N 35/00** $^{(2006.01)}$ **B25J 15/00** $^{(2006.01)}$

(52) Cooperative Patent Classification (CPC):
**B25J 5/007; B01L 9/06; B25J 15/0014;
B25J 15/0095; B25J 15/0253; B25J 15/0475;
G01N 35/0099**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.07.2024 KR 20240097806**

(71) Applicant: **Samsung Electronics Co., Ltd.
Suwon-si, Gyeonggi-do 16677 (KR)**

(72) Inventors:
• **CHANG, Minsu
16678 Suwon-si (KR)**

• **KIM, Seungyeon
16678 Suwon-si (KR)**
• **JANG, Jun-Won
16678 Suwon-si (KR)**
• **HAN, Daewoong
16678 Suwon-si (KR)**
• **CHOI, Hyun Do
16678 Suwon-si (KR)**
• **HA, Taesin
16678 Suwon-si (KR)**

(74) Representative: **Elkington and Fife LLP
Prospect House
8 Pembroke Road
Sevenoaks, Kent TN13 1XR (GB)**

(54) **TRANSFER SYSTEM**

(57) A transfer system includes a tray configured to accommodate an object, the tray including a first guide comprising a first base surface, a first side surface, and a first curved chamfered surface between the first base surface and the first side surface, a station including at least one second guide including a second base surface, a second side surface, and a second curved chamfered surface between the second base surface and the second side surface, and a mobile apparatus configured to provide the tray to the station, the mobile apparatus including a holder configured to hold the tray, and a gripper configured to engage with the holder.

**FIG. 1**

**Description**

FIELD OF THE INVENTION

The disclosure relates to a transfer system.

BACKGROUND OF THE INVENTION

Transfer systems including a mobile apparatus (e.g., a mobile robot) and a gripper have been developed to transfer objects such as vials to predetermined positions. A predetermined number of objects may be accommodated in a carrier such as a tray and transferred by a transfer system. The carrier may be transferred to a shelf at a predetermined position by a mobile apparatus, and returned by the mobile apparatus.

Information disclosed in this Background section has already been known to or derived by the inventors before or during the process of achieving the embodiments of the present application, or is technical information acquired in the process of achieving the embodiments. Therefore, it may contain information that does not form the prior art that is already known to the public.

SUMMARY OF THE INVENTION

According to an aspect of the disclosure, a transfer system may include a tray configured to accommodate an object, the tray including a first guide comprising a first base surface, a first side surface, and a first curved chamfered surface between the first base surface and the first side surface, a station including at least one second guide including a second base surface, a second side surface, and a second curved chamfered surface between the second base surface and the second side surface, and a mobile apparatus configured to provide the tray to the station, the mobile apparatus including a holder configured to hold the tray, and a gripper configured to engage with the holder.

Proposed embodiments thus facilitate the transfer of vial trays using a mobile manipulator. In particular, proposed concepts relate to transferring and loading a tray (herein, referred to as a "vial tray") containing vials during a production process using vials (glass bottles with caps) in chemistry, bio, and semiconductors. As an example of using a proposed embodiment, when a person arranges a tray containing empty vials on a shelf, a mobile manipulator may automatically and stably perform a process of holding a tray, moving, placing the tray at a destination, and returning the used vial tray on the shelf. This may help to reduce physical effort of researchers and may allow the researchers to work more creatively.

Proposed concepts may include mechanical and software elements for introducing the advantages of the conventional arts and improving the issues thereof, for the purpose of transferring vials in the material development process utilized in semiconductors, displays, etc. Such concepts may include a method of compensating for pose misalignment using a camera of a mobile robot, without a separate camera for a multi-joint robot arm, and robot-friendly mechanical configurations for precisely and stably gripping and placing a vial tray.

Embodiments may precisely and safely transfer a vial tray in an environment where the positions of departure and destination can asynchronously change and objects between the departure and the destination are variable and irregular.

Exemplary embodiments may include a structure for compensating for positional misalignment between a vial tray and a gripper of a robot (Shape of gripper).

Some embodiments may include a structure for compensating for positional misalignment between a vial tray and a target point (Tray and tray stand).

**In** some proposed embodiments, a robot arm assembled (secure) with the mobile robot may correct a pose by calculating the relative position and relative angle between a marker and the mobile robot.

The at least one second guide may include a plurality of second guides, and an offset distance between a center of the first guide from a center between adjacent second guides among the plurality of second guides may be less than a sum of a first radius of curvature of the first curved chamfered surface and a second radius of curvature of the second curved chamfered surface.

The first radius of curvature may be substantially equal to the second radius of curvature.

The sum of the first radius of curvature and the second radius of curvature may be substantially equal to or less than a diameter of the first guide or at least one of the adjacent second guides.

An offset angle between the tray and the station may be less than 45 degrees.

The first curved chamfered surface or the second curved chamfered surface may have a cycloidal shape.

The first curved chamfered surface or the second curved chamfered surface may have a sine function shape.

The first curved chamfered surface or the second curved chamfered surface may have an exponential function shape.

The first curved chamfered surface or the second curved chamfered surface may have a hyperbolic tangent shape.

The gripper may include a first arm and a second arm configured to move with respect to each other.

The first arm may include a first tip including a chamfered surface and the second arm may include a first tip including a chamfered surface, and the first tip of the first arm and the first tip of the second arm may be configured to engage with the holder.

The holder may include a plurality of connection holes, the first arm may include a second tip and the second arm further may include a second tip, and the second tip of the first arm and the second tip of the second arm may be configured to engage with the holder via respective connection holes among the plurality of connection holes.

The holder may include a hole configured to receive the first guide.

The holder may include a third curved chamfered surface around the hole.

The holder further may include a first holder portion and a second holder portion configured to be separated from each other.

The holder may include a first holder portion including a first bar configured to hold the tray, and a second holder portion including a second bar configured to hold the tray.

The second guide may be provided on an upper surface of the station.

The second guide may be provided on a lower surface of the station.

The second guide may be provided at an edge area of the station.

The mobile apparatus may be configured to move with respect to the station.

According to an aspect of the disclosure, a transfer method may include engaging a holder with a gripper of a mobile apparatus, holding, by the mobile apparatus and with the holder, a tray including a first guide, moving, by the mobile apparatus, the tray toward a station including a second guide, recognizing, by the mobile apparatus, a marker in a vicinity of the station, placing, by the mobile apparatus, the tray at the station, and correcting, by the second guide, a positional error of the tray corresponding to an offset distance between an initial position of the tray and a desired position at which the tray is to be placed at the station by applying a force to the first guide.

According to an aspect of the disclosure, a mobile apparatus may include a holder configured to hold a tray accommodating an object, and a gripper configured to engage with the holder, where the holder may include a hole configured to receive a first guide of the tray, and the mobile apparatus may be configured to provide the tray to a station including a second guide, and correct a positional error of the tray with respect to the station by contacting a first chamfered surface of the first guide with a second chamfered surface of the second guide.

The hole of the holder may include a third chamfered surface configured to contact the first chamfered surface of the first guide and guide the first guide into the hole of the holder.

The holder further may include a first holder portion and a second holder portion configured to be separated from each other.

The holder may include a first holder portion including a first bar configured to hold the tray, and a second holder portion including a second bar configured to hold the tray.

Additional aspects will be set forth in part in the description which follows and, in part, will be apparent from the description, or may be learned by practice of the presented embodiments of the disclosure.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a perspective view of a transfer system according to one or more embodiments;
FIG. 2 is an exploded perspective view of a gripper and a holder according to one or more embodiments;
FIG. 3 is a diagram illustrating a mobile apparatus holding a tray according to one or more embodiments;
FIG. 4 is a diagram illustrating a mobile apparatus placing a tray at a station according to one or more embodiments;
FIG. 5 is a diagram illustrating a first guide and a second guide according to one or more embodiments;
FIG. 6 is a plan view of a tray and a station according to one or more embodiments;
FIG. 7 is a diagram illustrating a first guide and a second guide according to one or more embodiments;
FIG. 8A is a diagram illustrating a first guide and a second guide according to one or more embodiments;
FIG. 8B shows graphs illustrating shapes of chamfered surfaces according to one or more embodiments;
FIG. 9 is a diagram of a gripper and a holder according to one or more embodiments;
FIG. 10 is a diagram illustrating a mobile apparatus placing a tray at a station according to one or more embodiments;
FIG. 11 is a diagram illustrating a mobile apparatus placing a tray at a station according to one or more embodiments;
FIG. 12 is a diagram of a gripper and a holder according to one or more embodiments;
FIG. 13 is a diagram illustrating a mobile apparatus placing a tray at a station according to one or more embodiments; and
FIG. 14 is a diagram of a tray, a holder, and a gripper according to one or more embodiments.

DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Hereinafter, will be described in detail with reference to the attached drawings. In the drawings, like reference numerals refer to like elements throughout and sizes of constituent elements may be exaggerated for convenience of explanation and the clarity of the specification. Also, embodiments described herein may have different forms and should not be construed as being limited to the descriptions set forth herein.

It will also be understood that when an element is referred to as being "on" or "above" another element, the element may be in direct contact with the other element or other intervening elements may be present.

The terminology used herein is for the purpose of describing particular embodiments only and is not intended to be limiting. The singular forms "a", "an", and "the", as well as other singular forms of terms, are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof. The steps of all methods described herein can be performed in any suitable order unless otherwise indicated herein or otherwise clearly contradicted by context, and are not limited to the described order.

Unless otherwise defined, all terms including technical and scientific terms used herein have the same meaning as commonly understood by one of ordinary skill in the art to which the embodiments belong. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

It should be noted that if one component is described as being "connected," "coupled" or "joined" to another component, the former may be directly "connected," "coupled," and "joined" to the latter or "connected", "coupled", and "joined" to the latter via another component.

The same name may be used to describe an element included in the embodiments described above and an element having a common function. Unless otherwise mentioned, the descriptions of the examples may be applicable to the following examples and thus, duplicated descriptions will be omitted for conciseness.

As used herein, the terms "substantially", "approximately", "generally", and "about" in reference to a given parameter, property, or condition may include a degree that one of ordinary skill in the art would understand that the given parameter, property, or condition is met with a small degree of variance, such as within acceptable manufacturing tolerances.

The use of any and all examples, or exemplary language (e.g., "such as") provided herein, is intended merely to better illuminate the disclosure and does not pose a limitation on the scope of the disclosure unless otherwise claimed.

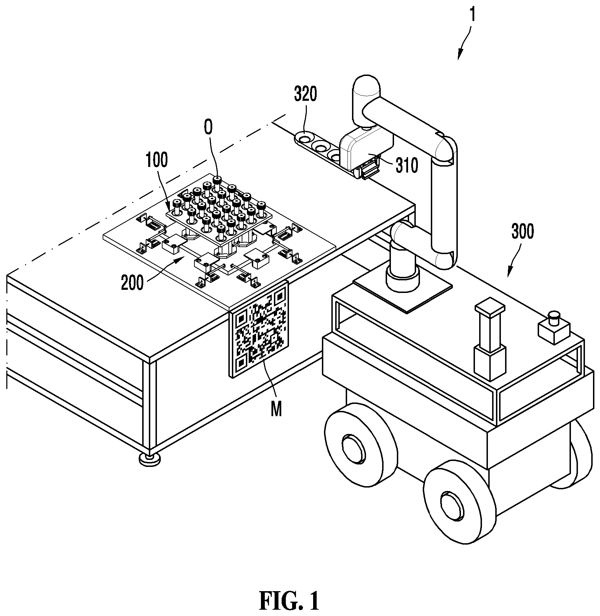

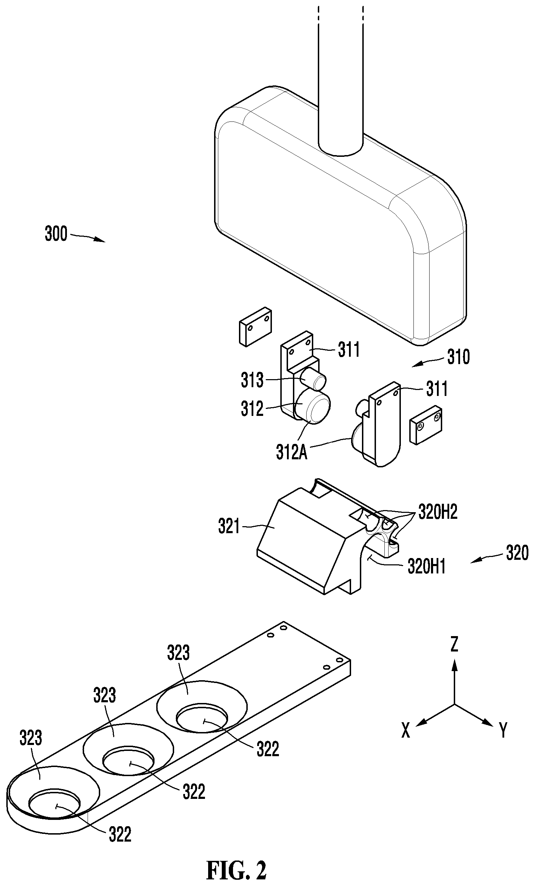

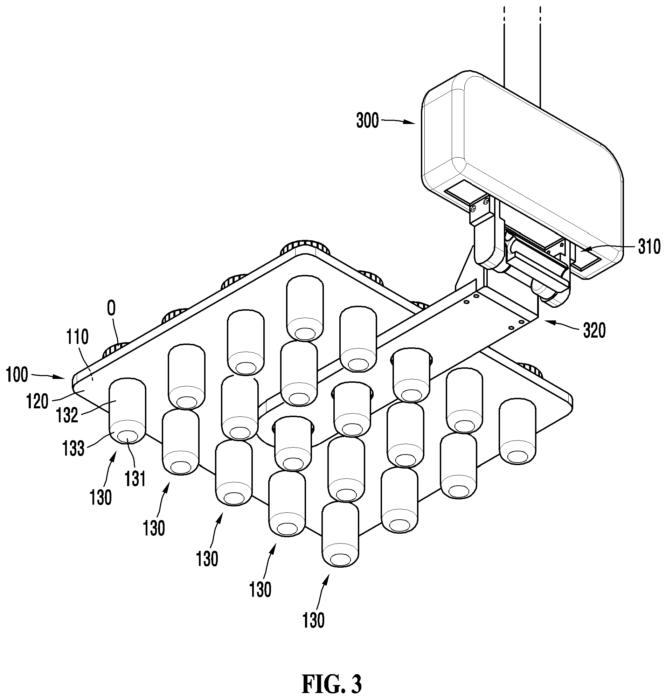

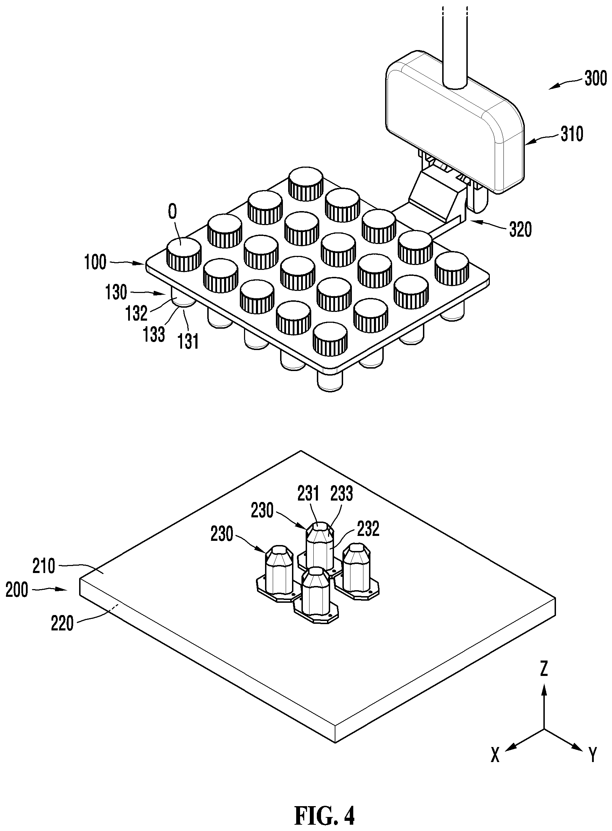

FIG. 1 is a perspective view of a transfer system according to one or more embodiments. FIG. 2 is an exploded perspective view of a gripper and a holder according to one or more embodiments. FIG. 3 is a diagram illustrating a mobile apparatus holding a tray according to one or more embodiments. FIG. 4 is a diagram illustrating a mobile apparatus placing a tray at a station according to one or more embodiments.

Referring to FIGS. 1 to 4, a transfer system 1 may place a tray 100 at a station 200 using a mobile apparatus 300 (e.g., a mobile robot). In the transfer system 1, the mobile apparatus 300 may reduce or prevent the tray 100 from departing from a position where the tray 100 is desired to be placed due to an offset (e.g., a first offset distance x or offset angle θ) of the mobile apparatus 300 with respect to the station 200 when placing the tray 100 at the station 200 or picking up the tray 100 from the station 200.

The transfer system 1 may be implemented as a system for transferring and loading the tray 100 containing an object O (e.g., a vial) during a chemical, biological, or semiconductor manufacturing process. For example, the mobile apparatus 300 may estimate positions based on a simultaneous localization and mapping (SLAM) algorithm while moving from an initial position to a target position. The transfer system 1 may include a marker M provided in the vicinity of the station 200, and the mobile apparatus 300 may be configured to recognize the marker M and determine the relative position and relative angle of the mobile apparatus 300 with respect to the target position. The transfer system 1 may include the marker M, and may move a gripper 310 and a holder 320, and hold and place the tray 100 using a camera in the mobile apparatus 300 and the marker M, without requiring a separate camera on the gripper 310. The tray 100 and the station 200 may reduce or eliminate the uncertainty that may occur due to structural errors (e.g., slippage between wheels and the ground, unbalance of the ground, etc.) or non-structural errors (e.g., sensor noise, or non-optimized parameters of an algorithm that uses signals measured by various sensors such as a lidar, an inertial measurement unit (IMU), an encoder, etc.) of the mobile apparatus 300 in the transfer system 1, which may enable the mobile apparatus 300 to stably pick up or place an object O. The mobile apparatus 300 may hold the tray 100 or place the tray 100 at the station 200 simply by moving the holder 320 in one direction (e.g., in the direction of gravity, in the direction opposite to the direction of gravity, or in the +/-Z-axis direction). When the mobile apparatus 300 moves the holder 320 in one direction, the positional error between the holder 320 and the tray 100 or the positional error between the tray 100 and the station 200 may be corrected.

The transfer system 1 is not limited thereto and may be applied to other applications as well. For example, the transfer system 1 may be applied to various applications such as a manufacturing process, logistics system, or automated laboratory where an object O is transferred and loaded using the mobile apparatus 300.

The transfer system 1 may include the tray 100 configured to accommodate an object O (e.g., a vial). The tray 100 may include a tray upper surface 110, a tray lower surface 120, and at least one first guide 130.

The first guide 130 may guide the tray 100 so that the tray 100 may be placed at a desired position. When the mobile apparatus 300 places the tray 100, a force may be applied from at least one second guide 230 to the first guide 130, and accordingly, the holder 320 and the gripper 310 may move in the direction of the applied force.

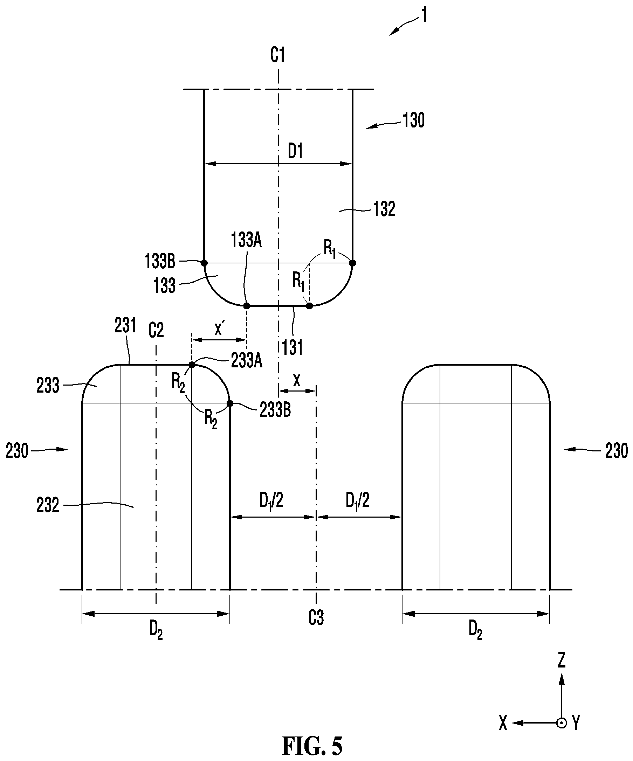

The first guide 130 may be configured to accommodate the object O. For example, when the tray 100 includes a plurality of first guides 130, a plurality of objects O may be accommodated in the first guides 130, respectively. The plurality of first guides 130 may be spaced apart at predetermined intervals on the tray lower surface 120. The first guide 130 may be on the tray lower surface 120. The first guide 130 may include a first base surface 131, a first side surface 132, and a first chamfered surface 133 between the first base surface and the first side surface 132. The first chamfered surface 133 may be curved. The first chamfered surface 133 may include a circular shape. The first side surface 132 may include a cylindrical shape. The first chamfered surface 133 may include a first chamfered surface lower end 133A (FIG. 5) that meets the first base surface 131, and a first chamfered surface 133B (FIG. 5) that meets the first side surface 132.

The transfer system 1 may include the station 200 configured to place the tray 100. The station 200 may include a station upper surface 210, a station lower surface 220, and at least one second guide 230.

The second guide 230 may guide the first guide 130 so that the tray 100 may be placed at a desired position. For example, the second guide 230 may guide the first guide 130 such that one first guide 130 may be interposed between four second guides 230. When the mobile apparatus 300 places the tray 100, the second guide 230 (or multiple second guides) may apply a force to the first guide 130, and accordingly, the tray 100 may move in the direction of the applied force. The plurality of second guides 230 may be spaced apart at predetermined intervals on the station upper surface 210. The second guide 230 may include a second base surface 231, a second side surface 232, and a second chamfered surface 233 between the second base surface 231 and the second side surface 232. The second chamfered surface 233 may be curved. The second chamfered surface 233 may include a circular shape. The second side surface 232 may include a cylindrical shape. The second chamfered surface 233 may include a second chamfered surface upper end 233A that meets the second base surface 231, and a second chamfered surface lower end 233B that meets the second side surface 232.

The transfer system 1 may include the mobile apparatus 300 configured to move with respect to the station 200. The mobile apparatus 300 may include the gripper 310 and the holder 320.

The gripper 310 may be configured to engage with the holder 320. The gripper 310 may include a pair of arms 311. The arms 311 may be configured to move toward each other and move away from each other. The gripper 310 may be a parallel gripper.

The gripper 310 may include first tips 312 on the arms 311, respectively, and configured to engage with the holder 320. The first tips 312 may secure the holder 320 to the gripper 310. Each of the first tips 312 may be on one surface (e.g., a surface in the +Y normal direction or a surface in the -Y normal direction) of each of the arms 311. The first tips 312 may have a cylindrical shape. Each of the first tips 312 may include a tip chamfered surface 312A. When the first tips 312 are engaged with the holder 320, the holder 320 may apply a force to the tip chamfered surface 312A, and correct the positional error of the first tips 312 with respect to a first connection hole 320H1.

The gripper 310 may include second tips 313 on the arms 311, respectively, and configured to engage with the holder 320. The second tips 313 may secure the holder 320 to the gripper 310. The second tips 313 may determine the angle of the holder 320. For example, the angle of the holder 320 (e.g., the angle formed with the XY plane) may vary depending on which of a plurality of second connection holes 320H2 the second tips 313 are inserted. For example, when the second tips 313 are in any second connection holes 320H2, the holder 320 may be substantially parallel to the ground surface (e.g., the XY plane), and when the second tips 313 are in any other second connection holes 320H2, the holder 320 may not be parallel to the ground surface (e.g., the XY plane). Each of the second tips 313 may be in the vicinity of each of the first tips 312 on one surface (e.g., the surface in the +Y normal direction or the surface in the -Y normal direction) of each of the arms 311. The second tips 313 may have a cylindrical shape. Each of the second tips 313 may include a chamfered surface. When the second tips 313 are engaged with the holder 320, the holder 320 may apply a force to the chamfered surface, and correct the positional error of the second tips 313 with respect to the second connection holes 320H2.

The width (e.g., the dimension on the XZ plane) of the second tips 313 may be less than the width (e.g., the dimension on the XZ plane) of the first tips 312.

Although it has been described that the first tips 312 and the second tips 313 are on the arms 311, embodiments are not limited thereto. For example, the holder 320 may include first tips 312 and second tips 313, and the gripper 310 may include a first connection hole 320H1 and second connection holes 320H2 configured to receive the first tips 312 and the second tips 313.

The holder 320 may be configured to hold the tray 100. The holder 320 may include a connecting piece 321 to be connected to the gripper 310. The holder 320 may include the first connection hole 320H1 and the plurality of second connection holes 320H2 in the connecting piece 321. The first connection hole 320H1 and the second connection holes 320H2 may be substantially parallel to each other. The first connection hole 320H1 and the second connection holes 320H2 may be substantially parallel to the first tips 312 and the second tips 313.

The holder 320 may include at least one hole 322 configured to receive the first guide 130. The hole 322 may be in a direction (e.g., the -Z direction) perpendicular to the first connection hole 320H1 or the second connection holes 320H2. The holder 320 may include at least one third chamfered surface 323 around the hole 322. The third chamfered surface 323 may be curved. When the holder 320 lifts the tray 100, the first guide 130 may apply a force to the third chamfered surface 323, and accordingly, the holder 320 may move in the direction of the applied force. Thus, the holder 320 may hold the tray 100 when a center of the first guide 130 is offset with respect to the center of the hole 322.

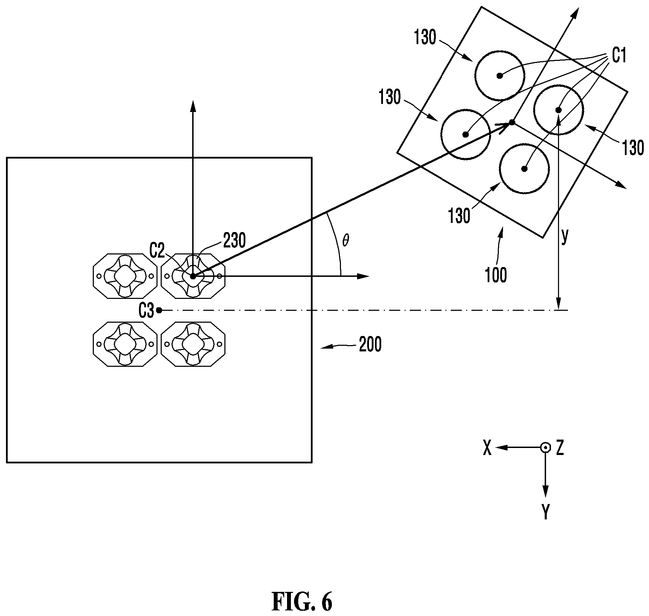

FIG. 5 is a diagram illustrating a first guide and a second guide according to one or more embodiments. FIG. 6 is a plan view of a tray and a station according to one or more embodiments. Referring to FIGS. 1 to 6, an operation of placing the tray 100 at the station 200 by the mobile apparatus 300 in the transfer system 1 will be described as an example.

Referring to FIG. 1, the mobile apparatus 300 may move from the initial position toward the position of the tray 100 based on the SLAM algorithm. The mobile apparatus 300 may recognize the marker M and determine the pose information (e.g., the position and the angle) of the mobile apparatus 300. The mobile apparatus 300 may detect misaligned pose information after stopping. Based on the pose information, the mobile apparatus 300 may move the gripper 310 and the holder 320 to hold the tray 100 with the holder 320.

Referring to FIGS. 2 and 3, if there is an error in the position of the holder 320 such that the first guide 130 is not accurately placed in the hole 322, the first chamfered surface 133 may apply a force to the third chamfered surface 323, and the position of the holder 320 may be changed so that the first guide 130 may be placed in the hole 322.

Referring to FIGS. 4 and 5, when the tray 100 is placed at the station 200, the first guide 130 and the second guide 230 may guide the tray 100 at a desired position even if there is a first offset distance x. Here, the desired position may be a position where the axis of the first center C1 is placed on the axis of a third center C3, which is midway between second centers C2 of neighboring second guides 230. The first offset distance x may be the distance (e.g., the distance on the X-axis) between C1 and C3. That is, the first offset distance x may be a distance between the center axis of the first guide 130 corresponding to center C1 and the center axis at a midpoint between neighboring second guides 230, corresponding to center C3. The distance (e.g., the distance on the X-axis) between neighboring second guides 230 may be the width (e.g., the dimension on the X-axis) of the first guide 130. Although it is described that the distance between neighboring second guides 230 is equal to the width of the first guide 130, when the distance between neighboring second guides 230 is greater than the width of the first guide 130, the first guide 130 may be placed between the neighboring second guides 230, and the tray 100 may be placed at the station 200.

When the tray 100 is placed at the station 200, if the axis of the first center C1 is not exactly placed at a desired position (e.g., the axis of the third center C3) due to an error (e.g., the first offset distance x) in the position of the tray 100, the second chamfered surface 233 may apply a force to the first chamfered surface 133, and the position of the first guide 130 may change so that the first guide 130 may be placed at a desired position. When the first chamfered surface 133 has a first radius of curvature R1 and the second chamfered surface 233 has a second radius of curvature R2, the range of x that allows the second chamfered surface 233 to apply a force to the first chamfered surface 133 so that the first guide 130 may be placed at a desired position may be as in Equation (1).

$$x < R_1 + R_2 \tag{1}$$

As in Equation (1), the second guide 230 may apply a force to the first guide 130 until the first center C1 is at a desired position (e.g., the axis of the third center C3). As the first radius of curvature R1 and the second radius of curvature R2 are designed to be greater, the transfer system 1 may place the tray 100 at a desired position, even for a greater first offset distance x. Deriving the range of the first offset distance x that allows the first guide 130 and the second guide 230 to guide the tray 100 to a desired position is shown in Equation (2) below.

$$x' = \left(\frac{D_1}{2} + \frac{D_2}{2}\right) - \left(\frac{D_2}{2} - R_2\right) - \left(\frac{D_1}{2} - R_1\right) - x > 0 \qquad (2)$$

, where

$$x' > 0 \quad , \quad 0 < R_1 \le \frac{D_1}{2} \quad , \text{ and } \quad 0 < R_2 \le \frac{D_2}{2}$$

In Equation (2), x' denotes the distance on one plane (e.g., the XY plane) that is substantially parallel to the first base surface 131 and the second base surface 231 at the first chamfered surface lower end 133A and the second chamfered surface upper end 233A, D1 denotes the width of the first guide 130 (e.g., the dimension on the X-axis), and D2 denotes the width of the second guide 230 (e.g., the dimension on the X-axis). Rearranging the equation for x and the given constraints, Equation (1) may be derived.

When the first radius of curvature R1 and the second radius of curvature R2 are equal to each other as R, and the width D1 of the first guide and the width D2 of the second guide are equal to each other as D, the range of x that allows the second chamfered surface 233 to apply a force to the first chamfered surface 133 so that the first guide 130 may be placed at a desired position may be x < 2R. Substituting the given conditions, Equation (1) may be restated at Equation (3):

$$x' = D - (D/2 - R) - (D/2 - R) - x > 0 \qquad (3)$$

Therefore, x < 2R may be obtained as the range of the first offset distance x that allows the first chamfered surface 133 to apply a force to the second chamfered surface 233 so that the first guide 130 may be placed at a desired position. Also, since the radius of curvature should not be greater than half the width of the first guide 130, the first chamfered surface 133 and the second chamfered surface 233 may be designed according to Equation (4).

$$0 \le x < 2R \le D \qquad (4)$$

The sum of the first radius of curvature R1 and the second radius of curvature R2 may be substantially equal to or less than the width of the first guide 130 or the second guide 230.

Referring to FIG. 6, when the tray 100 is placed at the station 200, the first guide 130 and the second guide 230 may place the tray 100 at a desired angle even if there is a second offset distance y or an offset angle θ.

The second offset distance y may be the distance on one axis (e.g., the Y-axis) from the first center C1 to a position where the first center C1 is desired to be placed (e.g., the third center C3). The range of the second offset distance y that allows the first chamfered surface 133 to apply a force to the second chamfered surface 233 so that the first guide 130 may be placed at a desired position may be expressed as Equation (5).

$$y < (R_1 + R_2) \qquad (5)$$

Here, the desired position may be a position where the first centers C1 are placed around the second center C2, and the axes of the first centers C1 are substantially placed on the axes of the third centers C3. The offset angle θ may be the angle at which the tray 100 is misaligned with respect to the station 200 on one plane (e.g., the XY plane).

The range of the offset angle θ that allows the first guide 130 and the second guide 230 to guide the tray 100 to a desired position even if there is the offset angle θ may be expressed as in Equation (6).

$$\theta < \arctan\left(\frac{y_{max}}{x_{max}}\right) \qquad (6)$$

In Equation (6), since $x_{max}$ is the maximum value of the first offset distance x and $y_{max}$ is the maximum value of the second offset distance, the range of the offset angle θ may be as in Equation (7).

$$\theta < \arctan\left(\frac{R_1 + R_2}{R_1 + R_2}\right) \qquad (7)$$

When the tray 100 is placed at the station 200, if $\theta < 45°$, even if there is an offset distance (e.g., the first offset distance x or the second offset distance y) and the offset angle $\theta$, the second chamfered surface 233 may apply a force to the first chamfered surface 133, and the position of the first guide 130 may change so that the first guide 130 may be placed at a desired position.

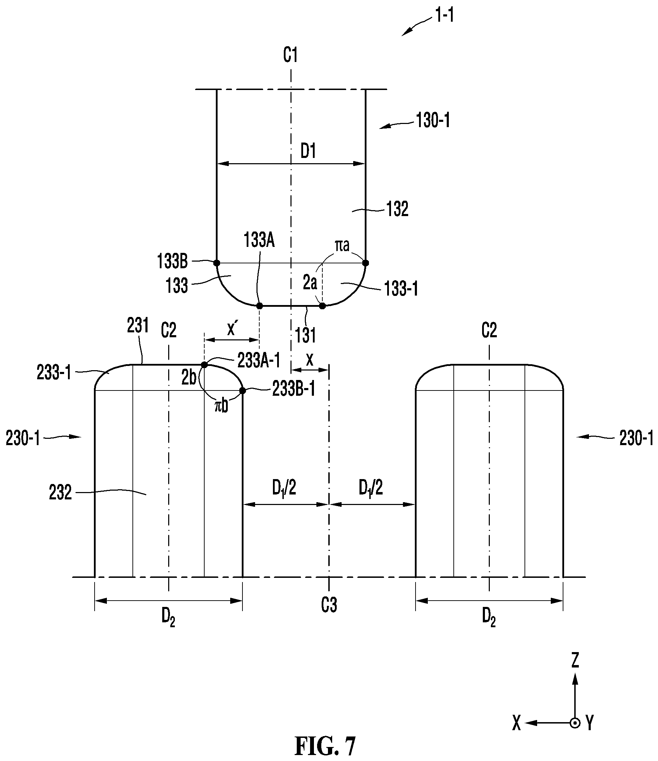

FIG. 7 is a diagram illustrating a first guide and a second guide according to one or more embodiments. Referring to FIG. 7, a transfer system 1-1 may include a first guide 130-1 and a second guide 230-1. The first guide 130-1 may include a first chamfered surface 133-1 having a cycloidal shape. The second guide 230-1 may include a second chamfered surface 233-1 having a cycloidal shape. When the radius of the circle of the cycloid function of the shape of the first chamfered surface 133-1 is a and the radius of the circle of the cycloid function of the shape of the second chamfered surface 233-1 is b, the range of the first offset distance x that allows the second chamfered surface 233-1 to apply a force to the first chamfered surface 133-1 so that the first guide 130-1 may be placed at a desired position may be provided as Equation (8).

$$x < \pi a + \pi b \qquad (8)$$

The range of the first offset distance x that allows the first guide 130 and the second guide 230 to guide the tray 100 to a desired position may be derived as in Equation (9).

$$x' = \left(\frac{D_1}{2} + \frac{D_2}{2}\right) - \left(\frac{D_2}{2} - \pi b\right) - \left(\frac{D_1}{2} - \pi a\right) - x > 0 \qquad (9)$$

Here, $\pi a$ denotes the horizontal distance (e.g., the distance in the X-axis direction) between a first chamfered surface lower end 133A-1 and a first chamfered surface upper end 133B-1, $\pi b$ denotes the horizontal distance (e.g., the distance in the X-axis direction) between a second chamfered surface upper end 233A-1 and a second chamfered surface lower end 233B-1, D1 denotes the width (e.g., the dimension on the X-axis) of the first guide 130-1, and D2 denotes the width (e.g., the dimension on the X-axis) of the second guide 230-1.

Since the range of the first offset distance x that allows the first guide 130 and the second guide 230 to guide the tray 100 to a desired position corresponds to Equation (8) , as the radius of the circle of the cycloid function of the first chamfered surface 133-1 or the second chamfered surface 233-1 increases, the transfer system 1-1 may place the tray 100 at a desired position even for a greater first offset distance x.

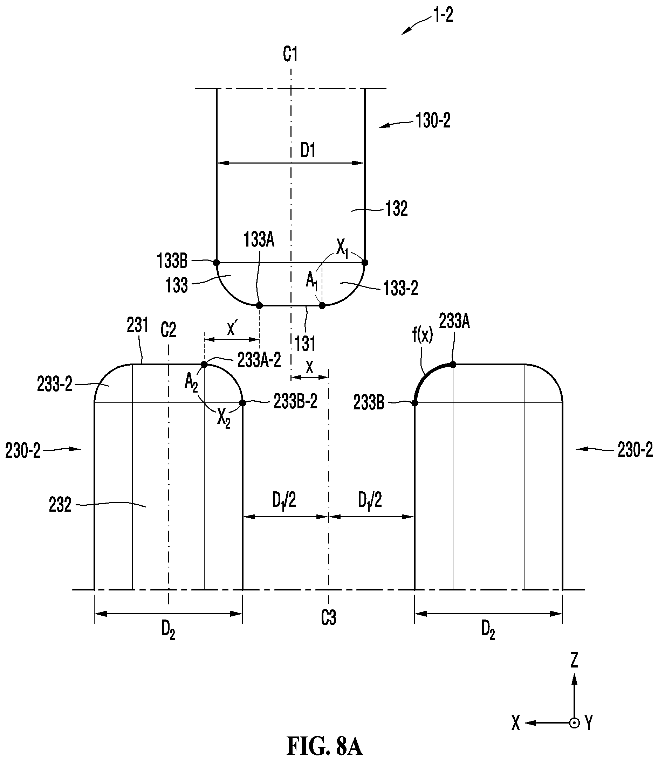

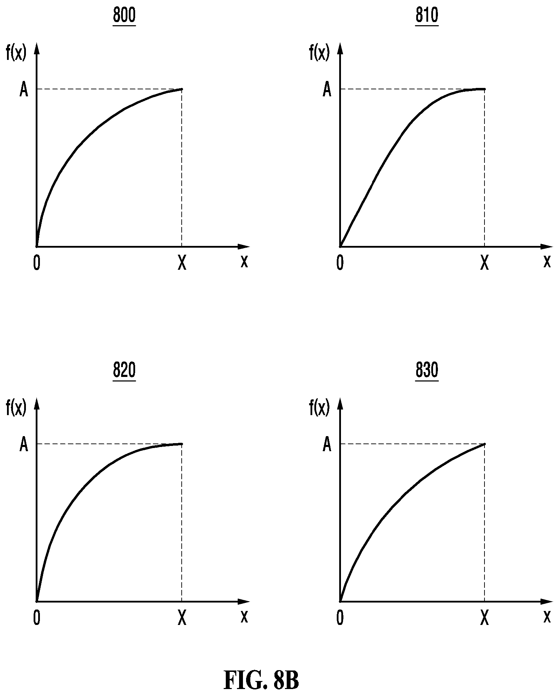

FIG. 8A is a diagram illustrating a first guide and a second guide according to one or more embodiments. FIG. 8B shows graphs illustrating shapes of chamfered surfaces according to one or more embodiments.

Referring to FIGS. 8A and 8B, a transfer system 1-2 may include a first guide 130-2 and a second guide 230-2. If the shape of a first chamfered surface 133-2 and/or a second chamfered surface 233-2 is a shape of a function satisfying the following conditions 1-7, the transfer system 1-2 may place the tray 100 at a desired position even when there is a first offset distance x.

Condition 1: $f(0) = 0$;
Condition 2: $f(X) = A$;
Condition 3: $f'(0) \gg 0$;
Condition 4: $f'(X) = 0$;
Condition 5: f(x) is all differentiable in $x \in [0, X]$;
Condition 6: f'(x)>0 is all valid in $x \in [0, X]$; and
Condition 7: The curvature f''(x) is continuous and smooth or a constant.

Here, X denotes the horizontal distance (e.g., the distance in the X-axis direction) between a first chamfered surface lower end 133A-2 and a first chamfered surface upper end 133B-2 or the horizontal distance (e.g., the distance in the X-axis direction) between a second chamfered surface upper end 233A-2 and a second chamfered surface lower end 233B-2, and A denotes the vertical distance (e.g., the distance in the Y-axis direction) between the first chamfered surface lower end 133A-2 and the first chamfered surface upper end 133B-2 or the vertical distance (e.g., the distance in the Y-axis direction) between the second chamfered surface upper end 233A-2 and the second chamfered surface lower end 233B-2. The form of a function f(x) that satisfies the above conditions and is applicable to the shape of the first chamfered surface 133-2 and/or the second chamfered surface 233-2 may be as shown in graph 800 of FIG. 8B. For example, when the shape of the function f(x) is applied to the second chamfered surface 233-2 (e.g., when the portion marked with f(x) on the right second guide 230-2 in FIG. 8A is the shape of the function f(x) shown in graph 800 of FIG. 8B), the second chamfered surface lower end 233B-2 of the cross-section of the second guide 230-2 may correspond to the origin (0, 0) of the graph of the function f(x), and the second chamfered surface upper end 233A-2 may correspond to (X, A).

For example, the shape of f(x), which may be the shape of the first chamfered surface 133-2 and/or the second chamfered surface 233-2, may have the shape of a sine function, an exponential function, or a hyperbolic tangent function, as shown in Equations (10)-(12).

$$f(x) = A \sin\left(\frac{\pi x}{2X}\right) \qquad (10)$$

$$f(x) = A\left(1 - e^{-\frac{kx}{X}}\right) \qquad (11)$$

$$f(x) = A \tanh\left(\frac{kx}{X}\right) \qquad (12)$$

Here, the value of k satisfying the conditions may be appropriately selected. The range of the first offset distance x that allows the first guide 130-2 and the second guide 230-2 to guide the tray 100 to a desired position may be as in Equation (13).

$$x < X_1 + X_2 \qquad (13)$$

In Equation (13), $X_1$ denotes the horizontal distance (e.g., the distance in the X-axis direction) between the first chamfered surface lower end 133A-2 and the first chamfered surface upper end 133B-2, and $X_2$ denotes the horizontal distance (e.g., the distance in the X-axis direction) between the second chamfered surface upper end 233A-2 and the second chamfered surface lower end 233B-2. If $X_1$ and $X_2$ are substantially the same, the range of the first offset distance x that allows the first guide 130-2 and the second guide 230-2 to guide the tray 100 to a desired position may be x < 2X.

Referring to FIG. 8B, various shapes that may be implemented as chamfered surfaces, such as chamfered surface 133, chamfered surface 233, etc., are depicted. Graph 800 shows a cycloidal shape, graph 810 shows a sine function shape, graph 820 shows an exponential function shape, and graph 830 shows a hyperbolic tangent function shape. Accordingly, the chamfered surfaces described herein may be implemented with any one or all of the shapes shown in FIG. 8B, as well as other shapes described herein and additional shapes that will be understood by one of ordinary skill in the art from the disclosure herein.

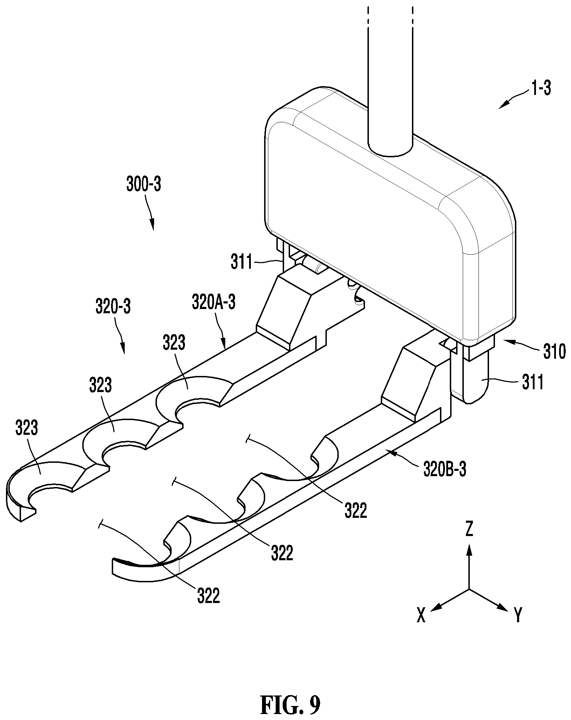

FIG. 9 is a diagram of a gripper and a holder according to one or more embodiments. Referring to FIG. 9, a transfer system 1-3 may include a mobile apparatus 300-3 including a holder 320-3 having a first holder portion 320A-3 and a second holder portion 320B-3 configured to be separated from each other. The first holder portion 320A-3 and the second holder portion 320B-3 may have a symmetrical structure. The first holder portion 320A-3 may be connected to an arm 311 on one side (e.g., the -Y side), and the second holder portion 320B-3 may be connected to an arm 311 on the other side (e.g., the +Y side). The first holder portion 320A-3 and the second holder portion 320B-3, which are connected to the respective arms 311 and spaced apart from each other, may move toward each other so that a first guide (e.g., the first guide 130 of FIGS. 3 to 6, the first guide 130-1 of FIG. 7, or the first guide 130-2 of FIG. 8A) may be placed in the hole 322. The first holder portion 320A-3 and the second holder portion 320B-3 may move toward each other to hold the tray 100. When the holder 320 holds a tray (e.g., the tray 100 of FIG. 1, 3 or 4), a first chamfered surface (e.g., the first chamfered surface 133 of FIGS. 3 to 6, the first chamfered surface 133-1 of FIG. 7 or the first chamfered surface 133-2 of FIG. 8A) may apply a force to the third chamfered surface 323. The first holder portion 320A-3 and the second holder portion 320B-3 may move away from each other to release the tray 100.

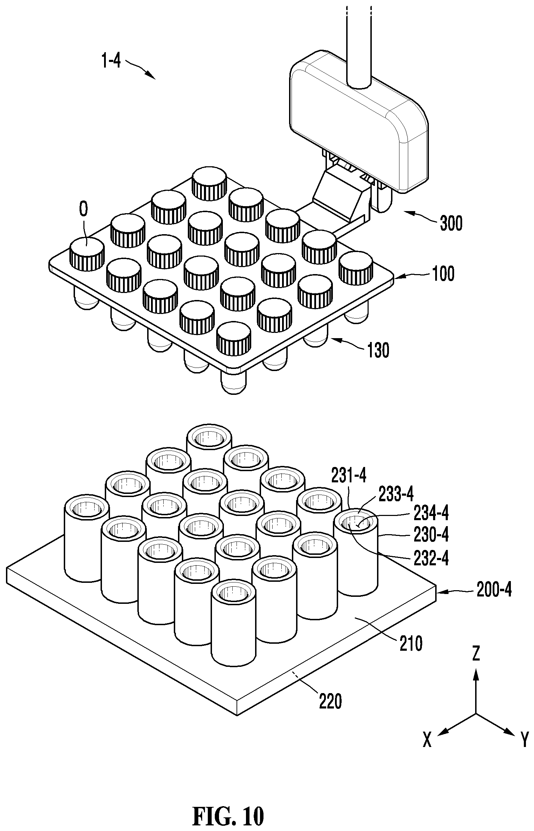

FIG. 10 is a diagram illustrating a mobile apparatus placing a tray at a station according to one or more embodiments. Referring to FIG. 10, a transfer system 1-4 may include a station 200-4. The station 200-4 may include at least one second guide 230-4 on the station upper surface 210. The second guide 230-4 may extend in a direction (e.g., the +Z direction) from the station lower surface 220 toward the station upper surface 210. One second guide 230-4 may be configured to accommodate one first guide 130. The second guide 230-4 may include an accommodation space 234-4 configured to accommodate the first guide 130. The accommodation space 234-4 may be defined as an inner space of a second side surface 232-4. The second side surface 232-4 may be an inner side surface. When the mobile apparatus 300 places the tray 100, a second chamfered surface 233-4 may apply a force to the first guide 130, and the first guide 130 may be moved to a position where it is accommodated in the accommodation space 234-4.

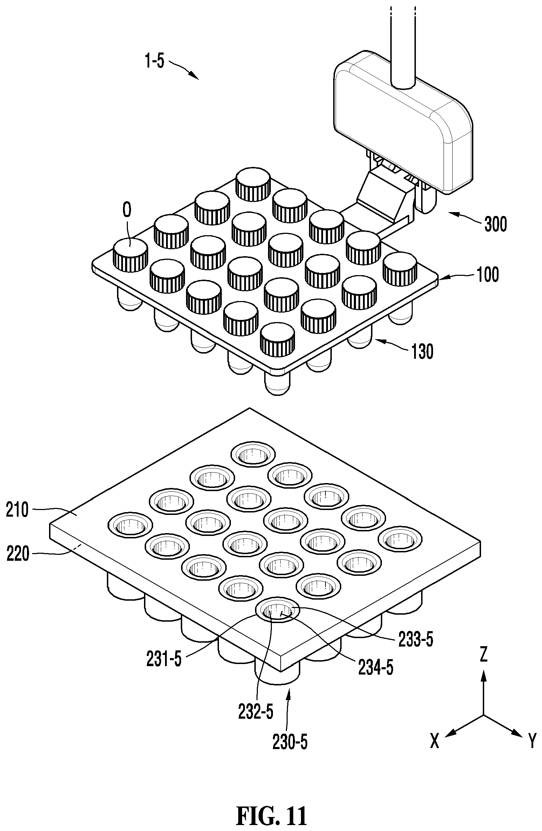

FIG. 11 is a diagram illustrating a mobile apparatus placing a tray at a station according to one or more embodiments. Referring to FIG. 11, a transfer system 1-5 may include a station 200-5. The station 200-5 may include at least one second guide 230-5 on the station lower surface 220. The second guide 230-5 may extend in a direction (e.g., the -Z direction) from the station upper surface 210 toward the station lower surface 220. A second base surface 231-5 and the station upper surface 210 may be substantially the same plane (e.g., the XY plane). One second guide 230-5 may be configured to accommodate one first guide 130. The accommodation space 234-5 may be defined as an inner space of a second side surface 232-5. The second side surface 232-5 may be an inner side surface. The second guide 230-5 may include an accommodation space 234-5 configured to accommodate the first guide 130. When the mobile apparatus 300 places the tray 100, a second chamfered surface 233-5 may apply a force to the first guide 130, and the first guide 130 may be moved to a position where it is accommodated in the accommodation space 234-5.

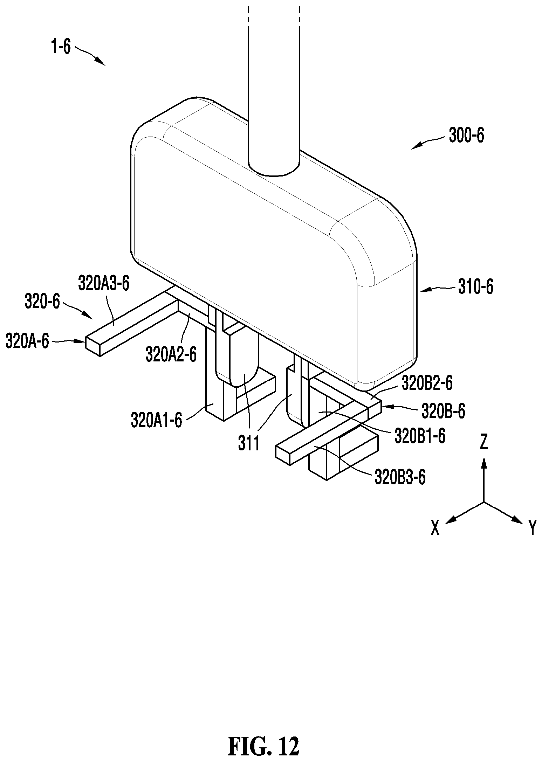

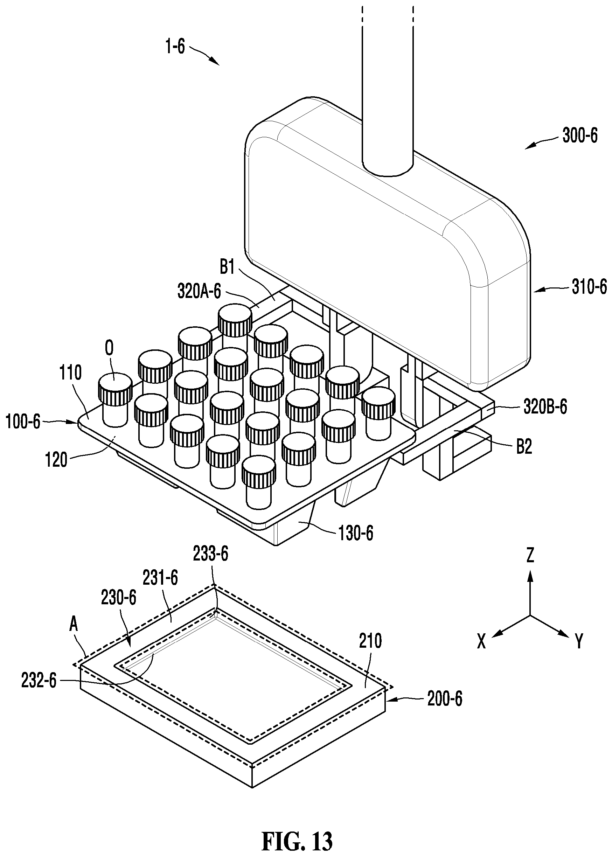

FIG. 12 is a diagram of a gripper and a holder according to one or more embodiments. FIG. 13 is a diagram illustrating a mobile apparatus placing a tray at a station according to one or more embodiments. Referring to FIGS. 12 and 13, a transfer system 1-6 may include a different type of holder 320-6. The holder 320-6 may include two separate holder portions, for example, a first holder portion 320A-6 and a second holder portion 320B-6. The first holder portion 320A-6 and the second holder portion 320B-6 may have a symmetrical structure.

The first holder portion 320A-6 may include a first bar configured to support a tray 100-6. The first bar may include a first portion 320A1-6 connected to an arm 311 on one side and extending in a direction (e.g., the -Z direction) parallel to the longitudinal direction (e.g., the -Z direction) of the arm 311. The first bar may include a second portion 320A2-6 connected to the first part 320A1-6 and extending in a direction (e.g., the -Y direction) perpendicular to the longitudinal direction of the arm 311. The first bar may include a third portion 320A3-6 connected to the second part 320A2-6 and extending in a direction (e.g., the +X direction) perpendicular to the longitudinal direction of the arm 311 and the one direction perpendicular to the longitudinal direction of the arm 311. The third portion 320A3-6 may be configured to support the tray lower surface 120.

The second holder portion 320B-6 may include a second bar configured to support the tray 100-6. The second bar may include a fourth portion 320B1-6 connected to the other arm 311 and extending in a direction (e.g., the -Z direction) parallel to the longitudinal direction (e.g., the -Z direction) of the arm 311. The second bar may include a fifth portion 320B2-6 connected to the fourth part 320B1-6 and extending in a direction (e.g., the +Y direction) perpendicular to the longitudinal direction of the arm 311. The second bar may include a sixth portion 320B3-6 connected to the fifth part 320B2-6 and extending in a direction (e.g., the +X direction) perpendicular to the longitudinal direction of the arm 311 and the one direction perpendicular to the longitudinal direction of the arm 311. The sixth portion 320B3-6 may be configured to support the tray lower surface 120. A portion (e.g., the third portion 320A3-6) of the first bar and a portion (e.g., the sixth portion 320B3-6) of the second bar may move toward each other and may support the tray lower surface 120.

Although the first bar and the second bar have been described as being divided into multiple portions, embodiments are not limited thereto. For example, the first bar may include only the third portion 320A3-6 directly connected to one arm 311, the second bar may include only the sixth portion 320B3-6 directly connected to the other arm 311, and the holder 320-6 may be configured to hold the tray 100-6 with only the third portion 320A3-6 and the sixth portion 320B3-6.

The transfer system 1-6 may include the tray 100-6 including a different type of first guide 130-6. The first guide 130-6 may include a polygonal shape. A plurality of first guides 130-6 may be provided along the edges of the tray lower surface 120. The plurality of first guides 130-6 may be spaced apart at equal intervals.

The transfer system 1-6 may include a station 200-6 including an edge area A, which corresponds to the edges of the station upper surface 210. The station 200-6 may include one second guide 230-6 positioned in the edge area A. The second guide 230-6 may include a second base surface 231-6 along the edge area A, a second side surface 232-6 on the inner side of the station 200-6, and a second chamfered surface 233-6 between the second base surface 231-6 and the second side surface 232-6. The second chamfered surface 233-6 may be configured to guide the first guides 130-6 on the inner side of the second side surface 232-6.

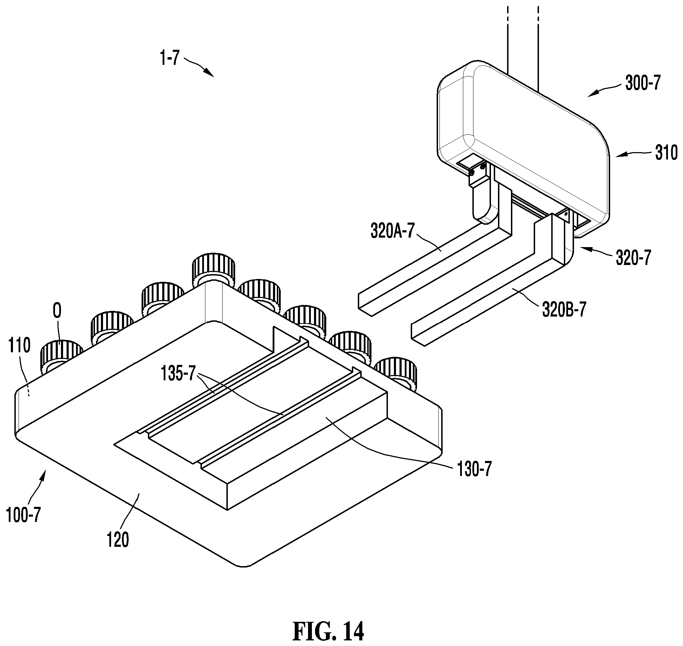

FIG. 14 is a diagram of a tray, a holder, and a gripper according to one or more embodiments. Referring to FIG. 14, a transfer system 1-7 may include a mobile apparatus 300-7 including a tray 100-7 and a holder 320-7 magnetically coupled to the tray 100-7. The tray 100-7 may include a first guide 130-7 placed on the tray lower surface 120. The first guide 130-7 may include a magnetic element 135-7. The holder 320-7 may include a first holder portion 320A-7 and a second holder portion 320B-7 configured to be magnetically coupled with the magnetic element 135-7. When the first holder portion 320A-7 and the second holder portion 320B-7 hold the tray 100-7, a magnetic force may be generated between the first holder portion 320A-7 or the second holder portion 320B-7 and the magnetic element 135-7, and the positional error of the gripper 310 and/or the holder 320-7 may be corrected.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

**Claims**

1.  A transfer system comprising:

    a tray configured to accommodate an object, the tray comprising a first guide comprising a first base surface, a first side surface, and a first curved chamfered surface between the first base surface and the first side surface;
    a station comprising at least one second guide comprising a second base surface, a second side surface, and a second curved chamfered surface between the second base surface and the second side surface; and
    a mobile apparatus configured to provide the tray to the station, the mobile apparatus comprising a holder configured to hold the tray, and a gripper configured to engage with the holder.

2.  The transfer system of claim 1, wherein the at least one second guide comprises a plurality of second guides, and wherein an offset distance between a center of the first guide from a center between adjacent second guides among the plurality of second guides is less than a sum of a first radius of curvature of the first curved chamfered surface and a second radius of curvature of the second curved chamfered surface.

3.  The transfer system of claim 2, wherein the first radius of curvature is substantially equal to the second radius of curvature.

4.  The transfer system of claim 2, wherein the sum of the first radius of curvature and the second radius of curvature is substantially equal to or less than a diameter of the first guide or at least one of the adjacent second guides.

5.  The transfer system of claim 2, 3 or 4, wherein an offset angle between the tray and the station is less than 45 degrees.

6.  The transfer system of any preceding claim, wherein the first curved chamfered surface or the second curved chamfered surface has one of a cycloidal shape, a sine function shape, or an exponential function shape.

7.  The transfer system of any preceding claim, wherein the first curved chamfered surface or the second curved chamfered surface has a hyperbolic tangent shape.

8.  The transfer system of any preceding claim, wherein the gripper comprises a first arm and a second arm configured to move with respect to each other,

    wherein the first arm comprises a first tip comprising a chamfered surface and the second arm comprises a first tip comprising a chamfered surface, and
    wherein the first tip of the first arm and the first tip of the second arm are configured to engage with the holder, and optionally wherein:

    the holder comprises a plurality of connection holes;
    the first arm further comprises a second tip and the second arm further comprises a second tip; and
    the second tip of the first arm and the second tip of the second arm are configured to engage with the holder via respective connection holes among the plurality of connection holes.

9.  The transfer system of any preceding claim, wherein the holder comprises a hole configured to receive the first guide,

    wherein the holder further comprises a third curved chamfered surface around the hole,
    wherein the holder further comprises a first holder portion and a second holder portion configured to be separated from each other.

10. The transfer system of any preceding claim, wherein the holder comprises a first holder portion comprising a first bar configured to hold the tray, and a second holder portion comprising a second bar configured to hold the tray.

11. The transfer system of any preceding claim, wherein the at least one second guide is provided on an upper surface of the station.

12. The transfer system of any preceding claim, wherein the at least one second guide is provided on a lower surface of the station.

13. The transfer system of any preceding claim, wherein the at least one second guide is provided at an edge area of the station.

14. The transfer system of any preceding claim, wherein the mobile apparatus is configured to move with respect to the station.

15. A transfer method comprising:

engaging a holder with a gripper of a mobile apparatus;
holding, by the mobile apparatus and with the holder, a tray comprising a first guide;
moving, by the mobile apparatus, the tray toward a station comprising a second guide;
recognizing, by the mobile apparatus, a marker in a vicinity of the station;
placing, by the mobile apparatus, the tray at the station; and
correcting, by the second guide, a positional error of the tray corresponding to an offset distance between an initial position of the tray and a desired position at which the tray is to be placed at the station by applying a force to the first guide.

**FIG. 1**

**FIG. 2**

**FIG. 3**

**FIG. 4**

FIG. 5

**FIG. 6**

**FIG. 7**

**FIG. 8A**

**FIG. 8B**

**FIG. 9**

**FIG. 10**

**FIG. 11**

FIG. 12

**FIG. 13**

**FIG. 14**

Europäisches
Patentamt
European
Patent Office
Office européen
des brevets

# EUROPEAN SEARCH REPORT

**Application Number**

EP 25 17 5283

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/217027 A1 (BOUCARD JOHN [US]) 3 August 2017 (2017-08-03) | 1-8, 10-14 | INV. B25J5/00 |
| Y | * figures 1-43 * | 9 | B01L9/06 B25J15/02 |
| Y | US 2022/266455 A1 (KANAI YOSHIKI [JP] ET AL) 25 August 2022 (2022-08-25) | 9 | B25J15/04 G01N35/00 |
| A | * figures 1-7 * | 8 | B25J15/00 |
| X | DE 10 2010 023610 A1 (MUELLER HERMANN [DE]) 15 December 2011 (2011-12-15) * figures 1-3 * | 15 | |
| A | WO 2023/043879 A1 (BECTON DICKINSON CO [US]) 23 March 2023 (2023-03-23) * figure 17 * | 1,2 | |
| A | CN 116 038 669 A (JIAOZHOU HOSPITAL AFFILIATED TO TONGJI UNIV) 2 May 2023 (2023-05-02) * figure 4 * | 9 | |
| A | US 6 857 174 B2 (DENSO CORP [JP]) 22 February 2005 (2005-02-22) * figures 1-3 * | 1 | TECHNICAL FIELDS SEARCHED (IPC) B25J B01L G01N |
| A | US 8 256 813 B2 (HSIEH JUNG-LIN [TW]; CHEN SHANG-CHIH [TW] ET AL.) 4 September 2012 (2012-09-04) * figures 1-3D * | 1 | |
| A | US 2019/375619 A1 (HOVENDAHL LARS WEBER [DK] ET AL) 12 December 2019 (2019-12-12) * figure 4 * | 1 | |

The present search report has been drawn up for all claims

| Place of search | Date of completion of the search | Examiner |
|---|---|---|
| Munich | 29 September 2025 | Champion, Jérôme |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    .................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 5283

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2025

| Patent document cited in search report | | Publication date | Patent family member(s) | | Publication date |
|---|---|---|---|---|---|
| US 2017217027 | A1 | 03-08-2017 | US | 2017217027 A1 | 03-08-2017 |
| | | | WO | 2016061471 A1 | 21-04-2016 |
| US 2022266455 | A1 | 25-08-2022 | DE | 102022200781 A1 | 25-08-2022 |
| | | | JP | 7458338 B2 | 29-03-2024 |
| | | | JP | 2022128789 A | 05-09-2022 |
| | | | US | 2022266455 A1 | 25-08-2022 |
| DE 102010023610 | A1 | 15-12-2011 | NONE | | |
| WO 2023043879 | A1 | 23-03-2023 | CA | 3231033 A1 | 23-03-2023 |
| | | | CN | 118488876 A | 13-08-2024 |
| | | | EP | 4401885 A1 | 24-07-2024 |
| | | | JP | 2024541706 A | 11-11-2024 |
| | | | US | 2024383658 A1 | 21-11-2024 |
| | | | WO | 2023043879 A1 | 23-03-2023 |
| CN 116038669 | A | 02-05-2023 | NONE | | |
| US 6857174 | B2 | 22-02-2005 | DE | 10301237 A1 | 24-07-2003 |
| | | | US | 2003131459 A1 | 17-07-2003 |
| US 8256813 | B2 | 04-09-2012 | TW | 201124322 A | 16-07-2011 |
| | | | US | 2011176900 A1 | 21-07-2011 |
| US 2019375619 | A1 | 12-12-2019 | CN | 110235001 A | 13-09-2019 |
| | | | CN | 117129702 A | 28-11-2023 |
| | | | DK | 201770063 A1 | 11-09-2018 |
| | | | EP | 3574329 A1 | 04-12-2019 |
| | | | JP | 7189409 B2 | 14-12-2022 |
| | | | JP | 2020506389 A | 27-02-2020 |
| | | | US | 2019375619 A1 | 12-12-2019 |
| | | | WO | 2018142361 A1 | 09-08-2018 |

EPO FORM P0459

For more details about this annex : see Official Journal of the European Patent Office, No. 12/82